# EUROPÄISCHE PATENTANMELDUNG

(11) **EP 2 955 614 A1**
(43) Veröffentlichungstag der Anmeldung: **16.12.2015**
(21) Anmeldenummer: 15164667.6
(22) Anmeldetag: 22.04.2015
(51) Int. Cl.: G06F 3/0482, G06F 3/0481, B60K 37/06, G06F 3/0488

(54) **ANWENDERSCHNITTSTELLE UND VERFAHREN ZUM ANPASSEN EINER SEMANTISCHEN SKALIERUNG EINER KACHEL**

(30) Priorität: 13.06.2014 DE 102014211342
(71) Anmelder: Volkswagen Aktiengesellschaft, 38440 Wolfsburg (DE)
(72) Erfinder: Kögler, Indra-Lena, 10829 Berlin (DE); Kuhn, Mathias, 14129 Berlin (DE); Chudzinski, Filip Piotr, 10557 Berlin (DE); Hahn, Alexander, 38104 Braunschweig (DE); Petersen, Sönke, 12205 Berlin (DE); Yosha, Omer, 10827 Berlin (DE)

(57) **Zusammenfassung**

Es werden eine Anwenderschnittstelle sowie ein Verfahren zum Anpassen einer semantischen Skalierung einer Kachel auf einer Anzeigeeinheit einer Anwenderschnittstelle vorgeschlagen. Das Verfahren umfasst die Schritte:
- Darstellen einer ersten Kachel (8) umfassend eine erste Vielzahl Schaltflächen (16),
- Erfassen eines Anwenderbefehls zur vergrößerten Darstellung der ersten Kachel (8) und im Ansprechen darauf
- vergrößertes Darstellen der ersten Kachel (8) umfassend eine zweite Vielzahl Schaltflächen (16, 17, 51, 52, 53, 54, 55).

## Beschreibung

### Stand der Technik

Die vorliegende Erfindung betrifft eine Anwenderschnittstelle sowie ein Verfahren zum Anpassen einer semantischen Skalierung einer Kachel auf einer Anzeigeeinheit einer Anwenderschnittstelle. Insbesondere betrifft die vorliegende Erfindung eine anwenderfreundliche Darstellung von Funktionen sowie deren ergonomische Bedienung.

Im Stand der Technik sind Anwenderschnittstellen bekannt, auf deren Anzeigeeinheiten so genannte Kacheln (z. B. als Bestandteile eines Homescreens) dargestellt werden können. Dabei bilden die Kacheln optisch gegeneinander abgegrenzte Sinneinheiten zum Zugreifen auf unterschiedliche Funktionsgruppen und Wiedergabe veränderlicher Informationen bezüglich der unterschiedlichen Funktionsgruppen. Beispielsweise kann eine erste Kachel einem ersten Funktionsumfang zugeordnet sein und bei der Entgegennahme einer Anwendereingabe eine Vielzahl von Informationsflächen und Schaltflächen bereithalten, über welche der Anwender die jeweiligen Unterfunktionen der Funktionsgruppe bedienen kann. Durch einen Anwender kann jedoch auch eine konkrete Funktion ("Favorit") oder der Aufruf derjenigen Funktion (z.B. "Zu Hause anrufen" oder "Wiedergabeliste Favoriten (zufällig) wiedergeben") mit einer Kachel assoziiert werden. Parallel zur ersten Kachel kann eine zweite Kachel, repräsentierend eine zweite Funktionsgruppe, dargestellt werden, bei deren Anwahl durch einen Anwender entsprechende Unterfunktionen der zweiten Funktionsgruppe angezeigt bzw. bedient werden können. Dabei kann die jeweilige Kachel bereits mehrere veränderliche Informationen der zugeordneten Funktionsgruppe darstellen, ohne dass sie Ziel einer Anwenderinteraktion wurde. Beim Anwählen einer Kachel verlieren ungeübte Anwender häufig den Überblick darüber, an welcher Stelle im Menü der Anwenderschnittstelle sie sich gerade befinden. Insbesondere kann es Anwendern Schwierigkeiten bereiten, die zur Rückkehr in den Homescreen erforderlichen Bedienschritte intuitiv vorzunehmen.

EP 1 959 337 A1 offenbart ein Anwenderendgerät und ein Verfahren zum Anzeigen eines Interaktionsmenüs, bei welchem eine Zoom-Funktion zur Erhöhung oder Verringerung der Anzahl auf einer Anzeige dargestellter Sinnbilder ("Icons") verwendet wird. Bereits vor dem Ausführen der Zoom-Funktion dargestellte Icons werden nach dem Ausführen der Zoom-Funktion vergrößert dargestellt.

Es ist eine Aufgabe der vorliegenden Erfindung, das Navigieren in einem Kachelbasierten Menü komfortabler zu gestalten.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 11 gelöst. Weiter werden ein Anwenderendgerät, ein Computerprogrammprodukt sowie eine Signalfolge und ein Fortbewegungsmittel zur Lösung der vorstehend genannten Aufgabe vorgeschlagen. Das erfindungsgemäße Verfahren dient dem Anpassen einer semantischen Skalierung einer Kachel auf einer Anzeigeeinheit einer Anwenderschnittstelle. Gegenüber einer herkömmlichen semantischen Skalierung beim Ausführen einer Zoom-Funktion wird zunächst eine erste Anzahl Kacheln dargestellt, von welchen mindestens eine erste Kachel eine erste Vielzahl Schaltflächen für einen direkten Zugriff auf mit den Schaltflächen assoziierte Funktionen ermöglicht. In einem zweiten Schritt wird ein Anwenderbefehl zur vergrößerten Darstellung der ersten Kachel erfasst ("Zoom-in"). Im Ansprechen darauf wird in einem dritten Schritt die erste Kachel vergrößert dargestellt und mit einer zweiten, von der ersten Vielzahl unterschiedlichen Vielzahl Schaltflächen für den Zugriff auf mit den Schaltflächen assoziierte Funktionen dargestellt. Mit anderen Worten werden durch die zweite Vielzahl Schaltflächen die Anzahl möglicher Direktzugriffe auf mit der ersten Kachel assoziierte Funktionen erhöht. Durch den Zoom-in verliert der Anwender jedoch nicht den geistigen Bezug zur ursprünglichen Darstellung der ersten Kachel (und ggf. weiterer Kacheln), was die Anwenderakzeptanz steigert und eine Suche nach Schaltflächen zur Rückkehr zur ursprünglichen Darstellung erübrigt. Insbesondere bei der Verwendung der erfindungsgemäßen Anwenderschnittstelle in einem Fortbewegungsmittel kann daher die Verringerung eines durch die Anwenderschnittstelle stets gegebenen Ablenkungspotentials erzielt werden. Dieses erhöht die Verkehrssicherheit erfindungsgemäß ausgestatteter Fortbewegungsmittel.

Die Unteransprüche zeigen bevorzugte Weiterbildungen der Erfindung.

Bevorzugt kann das erfindungsgemäße Verfahren weitergebildet werden, indem eine zweite Kachel, umfassend eine dritte Vielzahl Schaltflächen, auf der Anzeigeeinheit zusätzlich zu der ersten Kachel dargestellt wird und im Ansprechen auf das Erfassen des vorstehend beschriebenen Anwenderbefehls auch die zweite Kachel vergrößert dargestellt und die dritte Vielzahl Schaltflächen auf eine vierte Vielzahl Schaltflächen erhöht wird. Auf diese Weise kann ein Anwender auf mehr Unterfunktionen zweier parallel auf der Anzeigeeinheit dargestellter Funktionsgruppen (jeweils mit der ersten bzw. der zweiten Kachel assoziiert) zugreifen.

Erfindungsgemäß ist optional ebenso vorgesehen, einen Anwenderbefehl zur verkleinerten Darstellung der ersten Kachel (und sofern dargestellt auch einer zweiten Kachel) zu erfassen und im Ansprechen darauf die erst Kachel (und die ggf. dargestellte zweite Kachel) verkleinert und mit einer reduzierten fünften Anzahl Schaltflächen darzustellen. Dieses ermöglicht eine zusätzliche zeitgleiche Darstellung weiterer Kacheln und somit Direktzugriffe auf zusätzliche Funktionsgruppen.

Bevorzugt steigt die Anzahl dargestellter Schaltflächen mit zunehmender Größe der dargestellten Kachel(n). Insbesondere ist die zweite Vielzahl größer als die erste Vielzahl und alternativ oder zusätzlich die vierte Vielzahl größer als die dritte Vielzahl. Je nach gewählter Größe der ersten Kachel nach dem verkleinerten Darstellen, kann die fünfte Vielzahl größer oder kleiner als die erste Vielzahl ausfallen. Auf diese Weise sind eine komfortable Darstellung sowie ein komfortabler Zugriff auf die Schaltflächen stets unabhängig von der dargestellten Größe der Kachel sichergestellt.

Der Anwenderbefehl zur vergrößerten bzw. verkleinerten Darstellung der jeweiligen Kachel kann das Betätigen einer auf der Anzeigeeinheit dargestellten Schaltfläche umfassen. Die Schaltfläche kann beispielsweise auf einer jeweiligen Kachel selbst dargestellt werden, wodurch eine Anwahl der Kachel und die Eingabe eines Befehls zu ihrer vergrößerten Darstellung kombiniert erfolgen können. Alternativ oder zusätzlich kann eine sämtlichen Kacheln übergeordnete Schaltfläche betätigt werden, welche beispielsweise in einem vordefinierten Bereich auf dem Homescreen dargestellte Kachel oder Mehrzahl Kacheln erfindungsgemäß vergrößert darstellt. Alternativ oder zusätzlich kann eine zuvor aktivierte Kachel durch Betätigen der übergeordneten Schaltfläche vergrößert dargestellt werden. Hierbei können ggf. benachbarte Kacheln ebenfalls vergrößert und parallel zur vergrößerten ersten Kachel dargestellt werden. Alternativ oder zusätzlich kann eine Finger-Auseinander (englisch "spread")-Geste zur vergrößerten Darstellung bzw. eine Finger-Zueinander (englisch "pinch")-Geste zur verkleinerten Darstellung der Kacheln verwendet werden. Solche Gesten können auf berührungsempfindlichen Oberflächen oder frei im Raum ausgeführt werden, sofern die jeweilige Anwenderschnittstelle zu deren Erkennung eingerichtet ist. Alternativ oder zusätzlich kann eine so genannte "Doppel-Tap"-Geste (zweifache Berührung innerhalb kurzer Zeit) ausgeführt werden, um die Darstellung einer ersten Kachel (und ggf. weiterer Kacheln) eines Homescreens erfindungsgemäß zu vergrößern. Auch die Doppel-Tap-Geste kann auf einer berührungsempfindlichen Oberfläche, auf einem alternativen hierzu vorgesehenen Bedienelement oder frei im Raum als 3D-Geste ausgeführt und erkannt werden.

Bevorzugt ist vorgesehen, bei der vergrößerten Darstellung der betrachteten Kachel zusätzliche Schaltflächen zu allen bereits zuvor dargestellten Schaltflächen darzustellen. Auf diese Weise bleiben die bislang auf der betrachteten Kachel verfügbaren Schaltflächen und Direktzugriffe auf die mit ihnen assoziierten Funktionen auch nach dem vergrößerten Darstellen erhalten. Dies erhöht die Bedienergonomie und somit die Anwenderakzeptanz.

Bevorzugt ist eine jeweilige, auf dem Homescreen dargestellte, Kachel einer Funktionsgruppe aus den folgenden Themenbereichen zugeordnet, wobei bevorzugt keine zwei Kacheln einem identischen Themenbereich zugeordnet sind:
- Audio- und/oder Videowiedergabe
- Klimatisierung
- Heizung
- Bordcomputer
- Ambientelicht
- Sehenswertes in der Umgebung (englisch "points of interest")
- Navigation
- Adressbuch
- Telefonie
- Textnachrichten
- ein Verweis auf eine Anzeige eines Bildschirminhaltes eines externen Anwenderendgerätes.

Bevorzugt kann das vergrößerte Darstellen der ersten Kachel im Ansprechen auf die Anwendereingabe eine optisch im Wesentlichen stufenlose Vergrößerung der Kachel bzw. Kacheln umfassen. Auf diese Weise wird das Anwenderverständnis in Form eines erhöhten optischen Bezuges zwischen der Ausgangsdarstellung und der ursprünglichen Darstellung und der vergrößerten Darstellung begünstigt. Entsprechend kann auch das verkleinerte Darstellen eine optisch stufenlose Verkleinerung der Kachel bzw. der Kacheln umfassen. Zusätzlich zur verbesserten Anwenderorientierung wird die Anwenderfreude (englisch "joy of use") durch diese Maßnahme verbessert.

Gemäß einer anderen Ausprägung der vorliegenden Erfindung wird ein Verfahren zum Anzeigen einer Menüleiste auf einer Anzeigeeinheit einer Anwenderschnittstelle, insbesondere eines Fortbewegungsmittels vorgeschlagen. Das Verfahren umfasst die Schritte eines Darstellens eines Homescreens auf der Anzeigeeinheit, Erfassen einer Wischgeste, insbesondere als frei im Raum ausgeführte 3D-Geste oder als berührende Geste auf einem Touch-Screen, und im Ansprechen darauf Anzeigen der Menüleiste. Bevorzugt ist die Wischgeste keiner Kachel des Homescreens zugeordnet. Weiter bevorzugt startet die Wischgeste vom Rand oder von außerhalb des Randes der Anzeigeeinheit und ist bevorzugt in Richtung der Mitte der Anzeigeeinheit gerichtet. Der Platz, an welchem die Menüleiste erscheint, kann vor ihrem Erscheinen anderweitig belegt oder unbenutzt sein (Schwarzer Hintergrund, Wallpaper o.ä.). Die Menüleiste kann sich entlang eines Randes der Anzeigeeinheit erstrecken. Die Menüleiste kann zur Erzeugung neuer Kacheln oder für eine Neuzuweisung von Funktionen zu bereits bestehenden Kacheln verwendet werden. Zudem können Funktionen über die Menüleiste zugegriffen werden, welche nicht mit Kacheln assoziiert oder assoziierbar sind. Mögliche Funktionsbereiche, welchen die Schaltflächen oder (je nach Größe auch) Kacheln der Menüleiste zugeordnet sind, sind
- Audio- und/oder Videowiedergabe ("Medien")
- Klimatisierung
- Heizung
- Bordcomputer
- Ambientelicht
- Sehenswertes in der Umgebung (englisch "points of interest")
- Navigation
- Adressbuch
- Telefonie
- Textnachrichten
- ein Verweis auf eine Anzeige eines Bildschirminhaltes eines externen Anwenderendgerätes.

Gemäß einem zweiten Erfindungsaspekt wird eine Anwenderschnittstelle vorgeschlagen, welche eine Anzeigeeinheit und eine Eingabeeinheit umfasst. Die Anzeigeeinheit ist eingerichtet, eine erste Kachel umfassend eine erste Vielzahl Schaltflächen darzustellen, während die Eingabeeinheit eingerichtet ist, einen Anwenderbefehl zur vergrößerten (bzw. verkleinerten) Darstellung der ersten Kachel (oder weiterer Kacheln) zu erfassen. Im Ansprechen darauf ist die Anzeigeeinheit eingerichtet, die erste Kachel umfassend eine zweite Vielzahl Schaltflächen darzustellen. Durch die Darstellung der zweiten Vielzahl Schaltflächen wird die Möglichkeit geschaffen, mehr Direktzugriffe bezüglich der durch die erste Kachel repräsentierten Funktionsgruppe durchzuführen. Mit anderen Worten ist die erfindungsgemäße Anwenderschnittstelle eingerichtet, die Merkmale, Merkmalskombinationen und die sich aus diesen ergebenden Vorteile entsprechend dem oben beschriebenen Verfahren zu verwirklichen, sodass zur Vermeidung von Wiederholungen auf die diesbezüglichen Ausführungen verwiesen wird.

Gemäß einem dritten Aspekt der vorliegenden Erfindung wird ein Anwenderendgerät vorgeschlagen, welches beispielsweise als Notebook, Netbook, Ultrabook, Tablet, Smartphone oder anderes mobiles drahtloses Kommunikationsgerät ausgestaltet sein kann. Erfindungsgemäß umfasst das Anwenderendgerät eine Anwenderschnittstelle, wie sie in Verbindung mit dem zweitgenannten Erfindungsaspekt im Detail beschrieben worden ist. Die Merkmale, Merkmalskombinationen und Vorteile ergeben sich entsprechend.

Gemäß einem vierten Aspekt der vorliegenden Erfindung wird ein Computerprogrammprodukt (z. B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blue-Ray-Disk, Flash-Speicher, Festplatte, RAM/ROM, Cache etc. ausgestaltet sein.

Gemäß einem fünften Aspekt der vorliegenden Erfindung wird eine Signalfolge repräsentierend Instruktionen vorgeschlagen, welche einen programmierbaren Prozessor in die Lage versetzt, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem sechsten Aspekt der vorliegenden Erfindung wird ein Fortbewegungsmittel vorgeschlagen, welches beispielsweise als Pkw, als Transporter, als Lkw, als Luft- und/oder Wasserfahrzeug ausgestaltet sein kann. Das Fortbewegungsmittel umfasst eine erfindungsgemäß ausgestaltete Anwenderschnittstelle, wie sie in Verbindung mit dem zweitgenannten Erfindungsaspekt im Detail beschrieben worden ist. Die Merkmale, Merkmalskombinationen und Vorteile ergeben sich entsprechend.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1a: eine schematische Darstellung eines Ausführungsbeispiels eines erfindungsgemäßen Fortbewegungsmittels umfassend Komponenten eines Ausführungsbeispiels einer erfindungsgemäßen Anwenderschnittstelle;
- Figur 1b: eine schematische Darstellung eines Ausführungsbeispiels eines erfindungsgemäßen Anwenderendgerätes umfassend Komponenten eines Ausführungsbeispiels einer erfindungsgemäßen Anwenderschnittstelle;
- Figur 2: ein Screenshot eines Homescreens mit Kacheln;
- Figur 3: ein Screenshot einer vergrößerten Darstellung einer auf dem Homescreen nach Figur 2 dargestellten Kachel;
- Figur 4: ein Screenshot eines Homescreens;
- Figur 5: ein Screenshot einer vergrößerten Darstellung einer in dem Homescreen nach Figur 4 enthaltenen Kachel;
- Figur 6: ein Screenshot einer vergrößerten Darstellung einer weiteren im Homescreen nach Figur 4 enthaltenen Kachel;
- Figur 7: ein Flussdiagramm veranschaulichend Schritte eines Ausführungsbeispiels eines erfindungsgemäßen Verfahrens,
- Figur 8: ein Schaubild zur Veranschaulichung einer Anwenderinteraktion mit einer Anwenderschnittstelle gemäß einer alternativen Ausprägung der vorliegenden Erfindung, und
- Figur 9: eine Bildsequenz veranschaulichend Anwenderinteraktionen mit einer Anwenderschnittstelle gemäß einer alternativen Ausprägung der vorliegenden Erfindung.

### Ausführungsformen der Erfindung

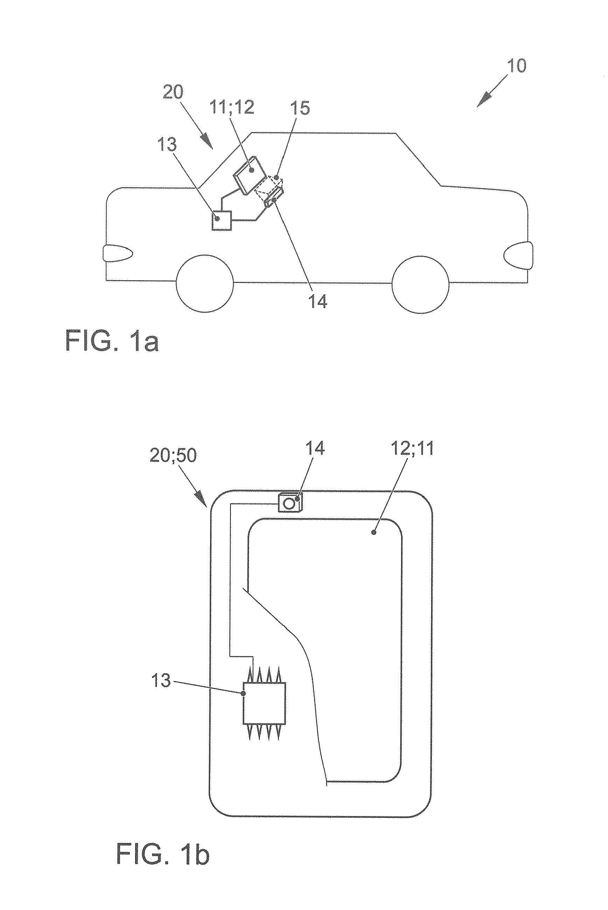

Figur 1a zeigt einen Pkw 10 als Ausführungsbeispiel eines erfindungsgemäßen Fortbewegungsmittels, welcher über Komponenten einer Anwenderschnittstelle 20 gemäß einem Ausführungsbeispiel der vorliegenden Erfindung verfügt. Ein elektronisches Steuergerät 13 (umfassend einen programmierbaren Prozessor) ist als Auswerteeinheit vorgesehen und informationstechnisch mit einem Bildschirm 11 als Anzeigeeinheit umfassend eine berührungsempfindliche Oberfläche 12 und eine Infrarot-LED-Leiste 14 als Eingabeeinheit verbunden. Die Infrarot-LED-Leiste 14 spannt einen 3D-Erfassungsbereich 15 auf, über welchen frei im Raum ausgeführte Anwendereingaben erfasst und auf dem Bildschirm 11 dargestellten Schaltflächen zugeordnet werden können.

Figur 1b zeigt ein Tablet 50 gemäß einem Ausführungsbeispiel eines erfindungsgemäßen Anwendungsendgerätes umfassend ein Ausführungsbeispiel einer erfindungsgemäßen Anwenderschnittstelle 20. Als Auswerteeinheit dient ein programmierbarer Prozessor 13, welcher informationstechnisch mit einem Bildschirm 11 als Anzeigeeinheit sowie mit einer optischen Kamera 14 und einer berührungsempfindlichen Oberfläche 12 als Eingabeeinheit informationstechnisch verbunden ist.

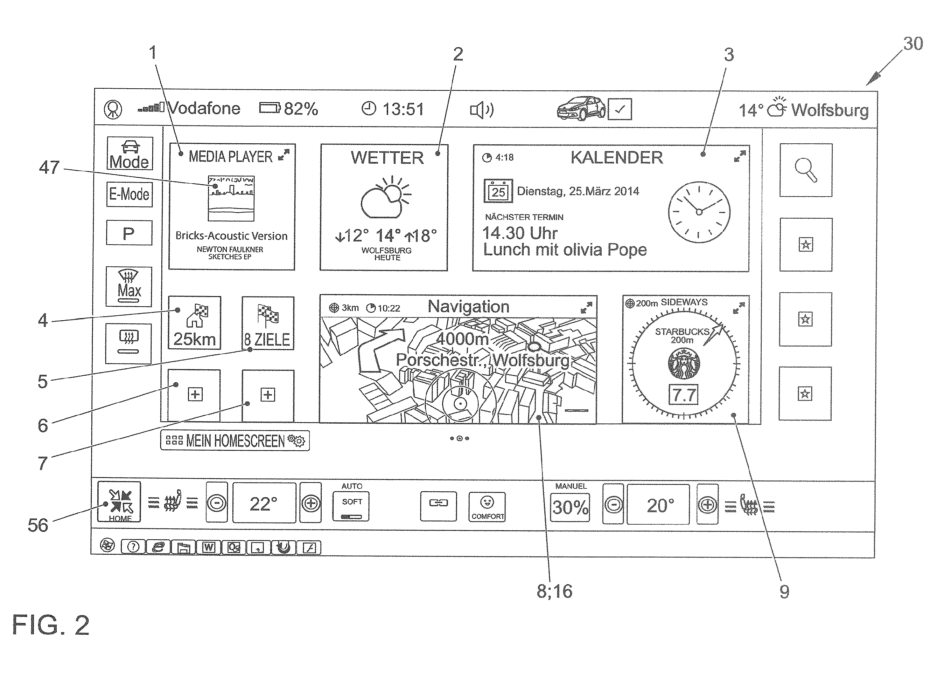

Figur 2 zeigt einen Screenshot eines Homescreens 30, auf welchem Kacheln 1, 2, 3, 4, 5, 6, 7, 8, 9 repräsentierend voneinander unterschiedliche Funktionsgruppen dargestellt sind. Beispielhaft ist eine Kachel 1 einer Musikwiedergabe zugeordnet und weist eine einzige Schaltfläche 47 in Form eines Album-Covers als erste Vielzahl Schaltflächen auf. Durch eine Anwenderinteraktion mit der Schaltfläche 47 kann der Anwender die Musikwiedergabe starten und bei wiederholter Interaktion stoppen. Eine Kachel 8 weist eine Schaltfläche 16 als erste Vielzahl Schaltflächen in Form einer perspektivischen Städteansicht auf, beim Bedienen welcher eine letzte Navigationsanweisung erneut ausgegeben wird. Zusätzlich weist der Homescreen 30 eine den Kacheln 1, 2, 3, 4, 5, 6, 7, 8, 9 übergeordnete Schaltfläche 56 für das Durchführen einer Zoom-out-(Verkleinerungs-)Funktion bzw. einer Zoom-in-(Vergrößerungs-)Funktion auf, um die Darstellungsgröße einer jeweiligen Kachel zu verkleinern bzw. zu vergrößern und erfindungsgemäß im Zuge dessen die auf der jeweiligen Kachel dargestellten Schaltflächen zu vermehren bzw. zu vermindern.

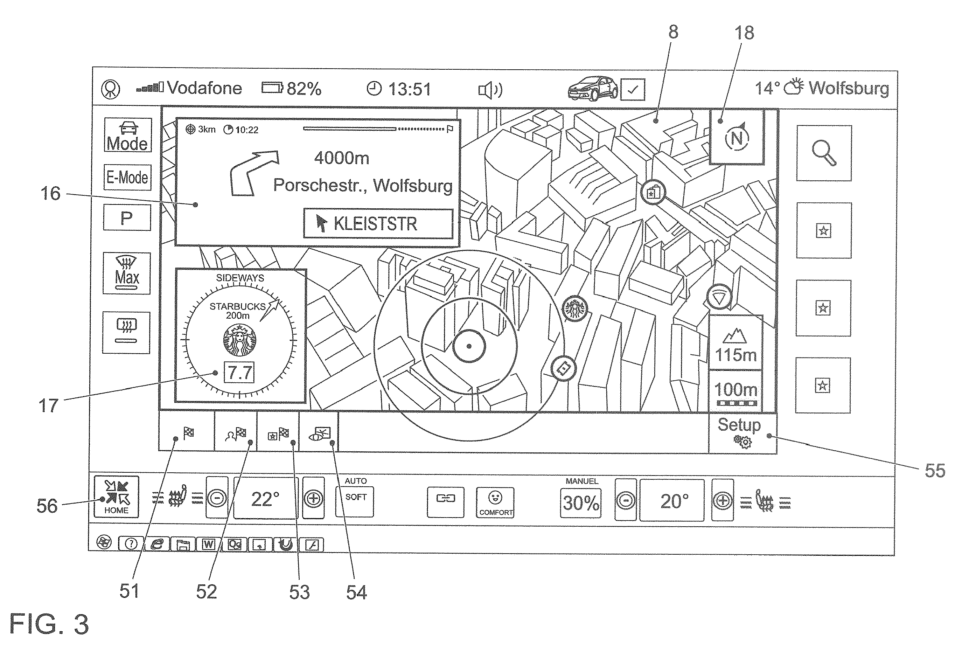

Durch das Ausführen einer Zoom-in-Geste gelangt der Anwender zu einer in Figur 3 dargestellten Bildschirmansicht.

Figur 3 zeigt eine vergrößerte Darstellung der Kachel 8 als nunmehr einzige Kachel des Homescreens 30. Die vergrößerte Darstellung ermöglicht erfindungsgemäß eine Erhöhung der Anzahl auf der Kachel 8 dargestellter Schaltflächen 16, 17, 18, 51, 52, 53, 54, 55. Hierbei entspricht beispielsweise die Schaltfläche 16 im Wesentlichen (bis auf die perspektivischen Städteansicht) der in Figur 2 gezeigten Darstellung der Kachel 8. Eine Interaktion mit dieser Schaltfläche 16 veranlasst das Navigationssystem zur Ausgabe der zuletzt gegebenen Navigationsanweisung über (nicht dargestellte) Lautsprecher. Eine hinzu gekommene Schaltfläche 17 ähnelt bis auf ihre Kopfzeile der Kachel 9 des Homescreens 30. Eine Anwenderinteraktion mit der Schaltfläche 17 bringt weitere Informationen zu einem nahegelegenen Cafe zum Vorschein und ermöglicht die Definition eines korrespondierenden Zwischenziels für die befahrene Route. Die übrigen Schaltflächen 51, 52, 53, 54, 55 sind anderen grundsätzlich bekannten Unterfunktionen der Funktionsgruppe "Navigation" zugeordnet.

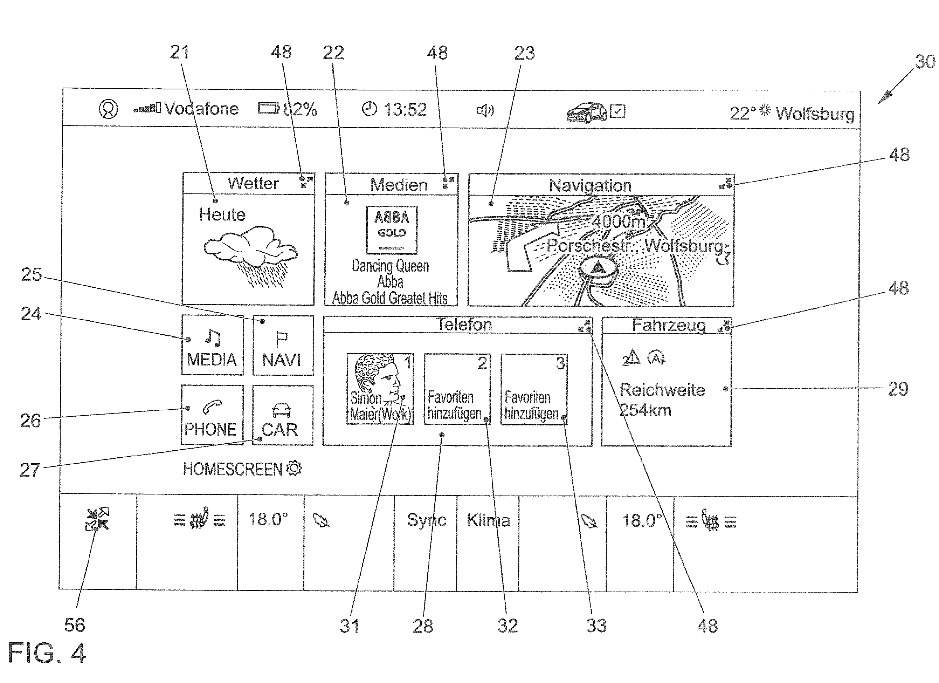

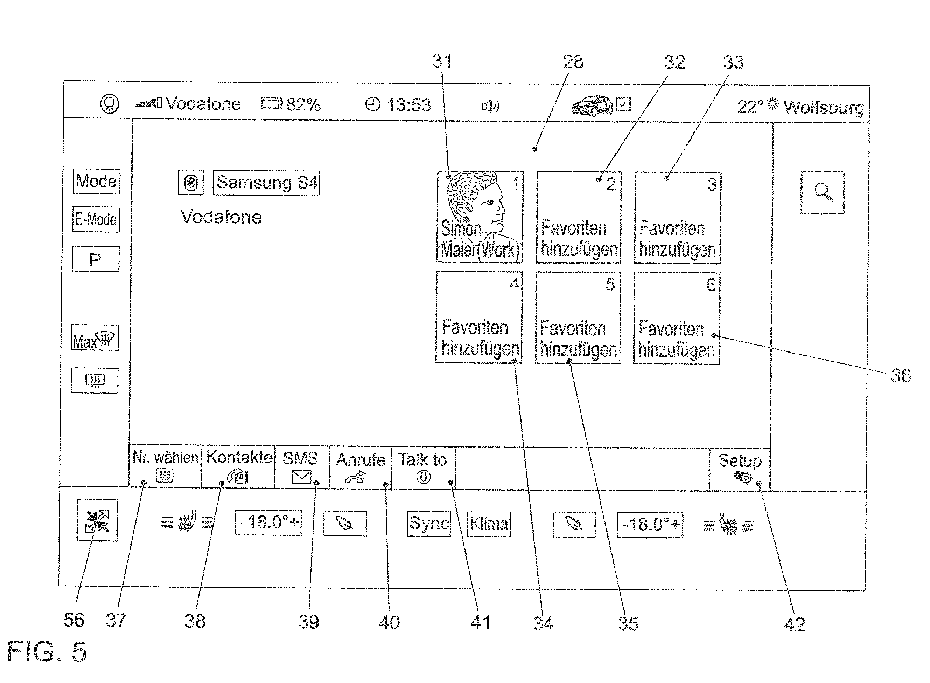

Figur 4 zeigt eine alternative Ansicht eines Homescreens nach einer Annäherung eines Anwenders an einen Erfassungsbereich. Im Ansprechen auf das Annähern des Erfassungsbereiches werden in den Titelleisten der Kacheln 21, 22, 23, 28 und 29 Schaltflächen 48 zur vergrößerten Darstellung der jeweiligen Kachel 21, 22, 23, 28, 29 hervorgehoben dargestellt, um den Anwender über die Möglichkeit der vergrößerten Darstellung zu informieren. Kleiner dargestellte Kacheln 24, 25, 26, 27 weisen indes keine Titelleiste auf. Die Kachel 21 weist in der gezeigten Darstellung keine Schaltfläche auf. Die Kachel 28 hingegen weist drei Schaltflächen 31, 32, 33 auf, mittels welcher der Funktionsgruppe "Telefon" Favoriten hinzugefügt bzw. angewählt werden können. Im Ansprechen auf ein Betätigen der Schaltfläche 48 der Kachel 28 wird die in Figur 5 dargestellte Ansicht erzeugt.

Figur 5 zeigt einen Screenshot einer im Ansprechen auf das vergrößerte Darstellen der Kachel 28 erzeugten Bildschirmansicht. Die Vielzahl Schaltflächen 31, 32, 33 ist um drei weitere Felder 34, 35, 36 zum Hinzufügen weiterer Favoriten sowie um Schaltflächen 37, 38, 39, 40, 41, 42 zum Anwählen weiterer funktionsgruppenbezogener Unterfunktionen ergänzt worden.

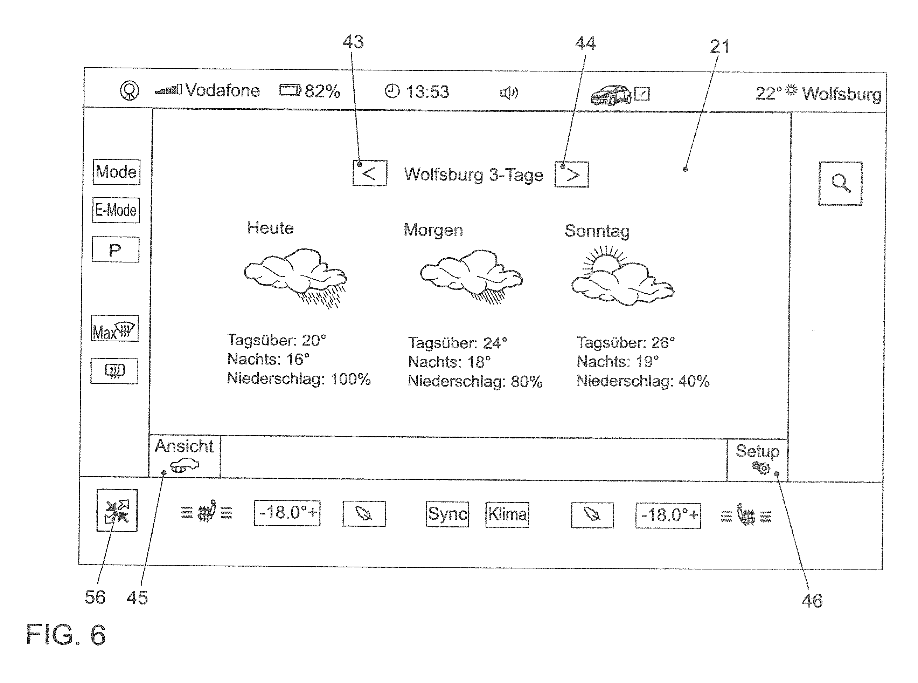

Figur 6 zeigt einen Screenshot einer im Ansprechen auf eine Interaktion mit dem Symbol 48 der Kachel 21 (s. Figur 4) erzeugten vergrößerten Darstellung der Kachel 21. Diese zeigt eine Drei-Tage-Wettervorhersage, welche zwei Schaltflächen 43, 44 zum Anzeigen bislang nicht dargestellter Tagesvorhersagen und zwei weitere Schaltflächen 45, 46 für den Zugriff auf mit der dargestellten Funktionsgruppe assoziierte Funktionen aufweist.

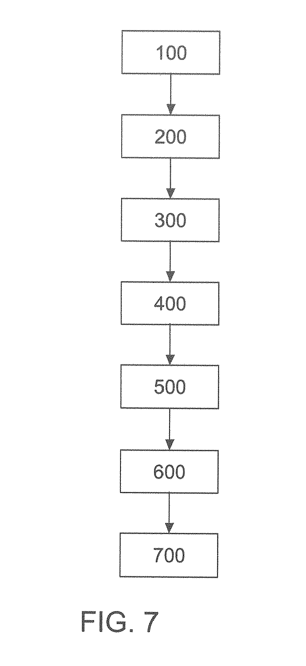

Figur 7 zeigt Schritte eines Ausführungsbeispiels eines erfindungsgemäßen Verfahrens zum Anpassen einer semantischen Skalierung einer Kachel auf einer Anzeigeeinheit einer Anwenderschnittstelle. In einem ersten Schritt 100 wird eine erste Kachel umfassend eine erste Vielzahl Schaltflächen dargestellt und in einem zweiten Schritt 200 wird eine zweite Kachel umfassend eine dritte Vielzahl Schaltflächen dargestellt. In Schritt 300 wird ein Anwenderbefehl zur vergrößerten Darstellung der ersten Kachel erfasst und im Ansprechen darauf in Schritt 400 die erste Kachel umfassend eine zweite Vielzahl Schaltflächen vergrößert dargestellt. Entsprechend wird in Schritt 500 die zweite Kachel umfassend eine vierte Vielzahl Schaltflächen vergrößert dargestellt. In Schritt 600 wird ein Anwenderbefehl zur verkleinerten Darstellung der ersten Kachel erfasst und im Ansprechen darauf in Schritt 700 die erste Kachel umfassend eine fünfte, von der ersten und der dritten Vielzahl verschiedene, Vielzahl Schaltflächen dargestellt.

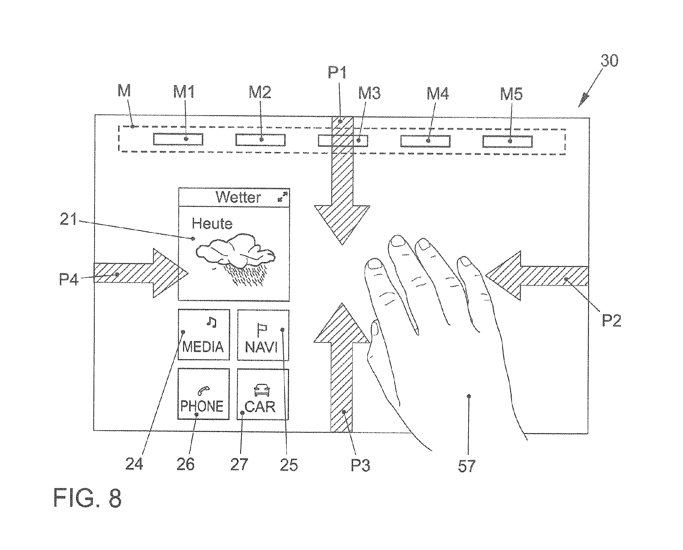

Figur 8 zeigt einen Homescreen 30, der im Wesentlichen der in Figur 4 dargestellten Konfiguration entspricht. Zunächst ist keine Menüleiste M vorgesehen, um dem Anwender in Zeiten ohne dem Wunsch nach Interaktion eine möglichst übersichtliche Bildschirmansicht zu präsentieren. Im Ansprechen auf das Ausführen einer Wischgeste mit der Hand 57 des Anwenders entlang einem der zur Veranschaulichung dargestellten Pfeile P1, P2, P3, P4 erscheint die Menüleiste M, welche eine Vielzahl Schaltflächen M1, M2, M3, M4, M5 aufweist. Über die Schaltflächen M1, M2, M3, M4, M5 können bereits dargestellten Kacheln neue Funktionen zugewiesen werden, neue Kacheln erstellt werden und auf Funktionen zugegriffen werden, welche bislang nicht mit auf dem Homescreen 30 dargestellten Kacheln assoziiert sind.

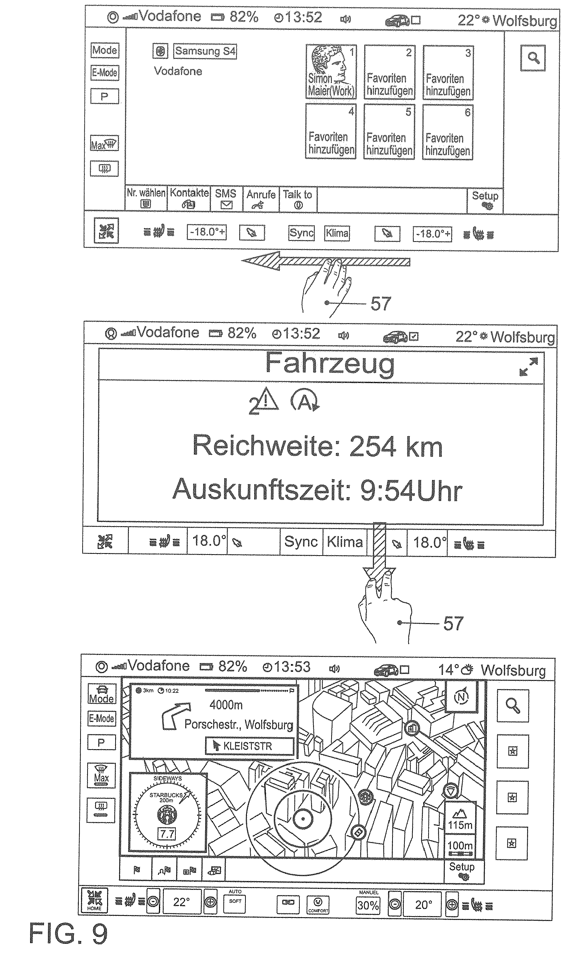

Figur 9 zeigt eine Bildsequenz veranschaulichend Anwenderinteraktionen ausgehend von einer bereits in Verbindung mit Figur 5 dargestellten Ansicht der Anwenderschnittstelle. Im Ansprechen auf das Ausführen einer horizontalen Wischgeste nach links mit der Hand 57 des Anwenders wird eine Vollbildansicht der mit der Kachel 29 assoziierten Fahrzeugfunktionen angezeigt. Im Ansprechen auf das Ausführen einer vertikalen Wischgeste nach unten gelangt der Anwender anschließend zur in Verbindung mit Figur 3 dargestellten Ansicht. Die Wischgeste kann beispielsweise mit einer vordefinierten Mindestanzahl Fingern (z.B. ein, zwei, drei, vier oder fünf Finger) unter Kontakt mit der Anwenderschnittstelle ausgeführt werden. Alternativ kann eine 3D-Geste ausgeführt, erkannt und zum Anlass für den vorstehend beschriebenen Wechsel zwischen den Vollbilddarstellungen verwendet werden. Die Reihenfolge der Vollbilddarstellungen ergibt sich in Verbindung mit den ausgeführten Wischgesten aus Figur 4. Ausgehend von der Telefonfunktion führt die nach links ausgeführte Wischgeste zur Anzeige der Fahrzeugfunktionen, da die Fahrzeugfunktionen im Homescreen 30 rechts neben den Telefonfunktionen angeordnet sind. Ausgehend von den Fahrzeugfunktionen gelangt der Anwender durch Ausführung einer Wischgeste nach unten zur Navigationsansicht, da im Homescreen 30 die Navigation oberhalb der Fahrzeugfunktionen dargestellt ist. Dennoch stellt der vorstehend beschriebene Zusammenhang zwischen den Wischgestenrichtungen und der Anordnung der Kacheln im Homescreen 30 ein Beispiel dar und könnte anderweitig (z.B. durch den Anwender) definiert werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1, 2, 3, 4, 5, 6, 7, 8, 9: Kacheln
- 10: Fortbewegungsmittel
- 11: Bildschirm
- 12: berührungsempfindliche Oberfläche
- 13: Prozessor/Auswerteeinheit
- 14: optische Kamera bzw. Infrarot-LED-Leiste
- 15: Erfassungsbereich
- 16, 17, 18, 19: Schaltflächen
- 20: Anwenderschnittstelle
- 21, 22, 23, 24, 25, 26, 27, 28, 29: Kacheln
- 30: Homescreen
- 31, 32, 33, 34, 35, 36, 37, 38, 39,:
- 40, 41, 42, 43, 44, 45, 46, 47: Schaltflächen
- 48: Schaltfläche zur vergrößerten Darstellung
- 50: Tablet
- 51, 52, 53, 54, 55: Schaltflächen
- 56: Schaltfläche zur globalen Änderung der Darstellungsgröße
- 57: Hand des Anwenders
- 100-700: Verfahrensschritte
- M: Menüleiste
- M1-M5: Schaltflächen

## Patentansprüche

1. Verfahren zum Anpassen einer semantischen Skalierung einer Kachel (1-9, 21-29) auf einer Anzeigeeinheit (11) einer Anwenderschnittstelle (20) umfassend die Schritte:
- Darstellen (100) einer ersten Kachel (8, 21, 28) umfassend eine erste Vielzahl Schaltflächen (16; 31, 32, 33),
- Erfassen (300) eines Anwenderbefehls zur vergrößerten Darstellung der ersten Kachel (8, 21, 28) und im Ansprechen darauf
- vergrößertes Darstellen (400) der ersten Kachel (8, 21, 28) umfassend eine zweite Vielzahl Schaltflächen (16, 17, 18; 31, 32, 33, 34, 35, 36, 37, 38, 39, 40, 41, 42; 43, 44, 45, 46, 51, 52, 53, 54, 55).

2. Verfahren nach Anspruch 1 weiter umfassend
- Darstellen (200) einer zweiten Kachel (3) umfassend eine dritte Vielzahl Schaltflächen (47) auf der Anzeigeeinheit (11) zusätzlich zu der ersten Kachel (8, 21, 28), und im Ansprechen auf das Erfassen des Anwenderbefehls
- vergrößertes Darstellen (500) der zweiten Kachel (3) umfassend eine vierte Vielzahl Schaltflächen.

3. Verfahren nach Anspruch 1 oder 2 weiter umfassend
- Erfassen (600) eines Anwenderbefehls zur verkleinerten Darstellung der ersten Kachel (8, 21, 28) und im Ansprechen darauf
- verkleinertes Darstellen (700) der ersten Kachel (8, 21, 28) umfassend eine fünfte Vielzahl Schaltflächen.

4. Verfahren nach einem der vorstehenden Ansprüche, wobei die zweite Vielzahl größer als die erste Vielzahl und/oder die vierte Vielzahl größer als die dritte Vielzahl ist.

5. Verfahren nach einem der vorstehenden Ansprüche, wobei
- der Anwenderbefehl das Betätigen einer auf der Anzeigeeinheit (11) dargestellten Schaltfläche (48) und/oder
- der Anwenderbefehl das Ausführen einer "Finger-auseinander"-Geste, und/oder
- der Anwenderbefehl das Ausführen einer "Doppel-Tap"-Geste, und/oder
- der Anwenderbefehl zur vergrößerten Darstellung der ersten Kachel (8, 21, 28) das Betätigen einer auf der ersten Kachel (8, 21, 28) dargestellten Schaltfläche (48), und/oder
- der Anwenderbefehl zur vergrößerten oder verkleinerten Darstellung der ersten Kachel (8, 21, 28) das Betätigen einer den Kacheln (3, 8, 21, 28) übergeordneten Schaltfläche (56),
umfasst.

6. Verfahren nach einem der vorstehenden Ansprüche, wobei die erste Kachel (8, 21, 28) Bestandteil eines Homescreens (30) ist.

7. Verfahren nach einem der vorstehenden Ansprüche, wobei
- durch die erste Vielzahl Schaltflächen (16; 31, 32, 33) und/oder
- durch die fünfte Vielzahl Schaltflächen bedienbare Funktionen auch über die zweite Vielzahl Schaltflächen (16, 17, 18; 31, 32, 33, 34, 35, 36, 37, 38, 39, 40, 41, 42; 43, 44, 45, 46, 51, 52, 53, 54, 55) bedienbar sind, und/oder durch die dritte Vielzahl Schaltflächen bedienbare Funktionen auch über die vierte Vielzahl Schaltflächen bedienbar sind.

8. Verfahren nach einem der vorstehenden Ansprüche, wobei die erste Kachel (8, 21, 28) eine erste Funktionsgruppe und die zweite Kachel (3) eine zweite Funktionsgruppe repräsentiert und die Vielzahl Schaltflächen (16, 17, 18; 31, 32, 33, 34, 35, 36, 37, 38, 39, 40, 41, 42; 43, 44, 45, 46, 51, 52, 53, 54, 55) jeweilige Auswahlen aus für die Funktionsgruppen definierten Funktionen darstellen.

9. Verfahren nach Anspruch 8, wobei die Funktionsgruppen Themenbereichen aus der folgenden Liste zugeordnet sind:
- Audio- und/oder Videowiedergabe,
- Klimatisierung,
- Heizung,
- Bordcomputer,
- Ambientelicht,
- Sehenswertes in der Umgebung,
- Navigation,
- Adressbuch,
- Telefonie,
- Textnachrichten.

10. Verfahren nach einem der vorstehenden Ansprüche, wobei
- das vergrößerte Darstellen (400, 600) eine optisch stufenlose Vergrößerung der Kachel (8, 21, 28) bzw. Kacheln (8, 21, 28) umfasst, und/oder
- ein verkleinertes Darstellen (700) eine optisch stufenlose Verkleinerung der Kachel (8, 21, 28) bzw. Kacheln (8, 21, 28) umfasst.

11. Anwenderschnittstelle umfassend
- eine Anzeigeeinheit (11), welche eingerichtet ist, eine ersten Kachel (8, 21, 28) umfassend eine erste Vielzahl Schaltflächen (16; 31, 32, 33) darzustellen,
- eine Eingabeeinheit (12), welche eingerichtet ist, einen Anwenderbefehl zur vergrößerten Darstellung der ersten Kachel (8, 21, 28) zu erfassen, wobei die Anzeigeeinheit (11) weiter eingerichtet ist,
- im Ansprechen auf das Erfassen des Anwenderbefehls die erste Kachel (8, 21, 28) umfassend eine zweite Vielzahl Schaltflächen (16, 17, 18; 31, 32, 33, 34, 35, 36, 37, 38, 39, 40, 41, 42; 43, 44, 45, 46, 51, 52, 53, 54, 55) darzustellen.

12. Anwenderschnittstelle nach Anspruch 11, welche weiter eingerichtet ist, ein Verfahren nach einem der Ansprüche 1 bis 10 durchzuführen.

13. Anwenderendgerät, insbesondere mobiles Drahtloskommunikationsgerät (50), umfassend eine Anwenderschnittstelle (20) nach Anspruch 11 oder 12.

14. Computerprogrammprodukt umfassend Instruktionen oder Signalfolge repräsentierend Instruktionen, welche, wenn Sie auf einem programmierbaren Prozessor (13) einer Anwenderschnittstelle (20) nach einem der Ansprüche 11 oder 12 ausgeführt werden, den Prozessor (13) veranlassen, die Schritte eines Verfahrens nach einem der Ansprüche 1 bis 10 durchzuführen.

15. Fortbewegungsmittel, insbesondere Fahrzeug, bevorzugt ein PKW, ein Transporter, ein LKW, ein Luft- und/oder Wasserfahrzeug, umfassend eine Anwenderschnittstelle (20) nach einem der Ansprüche 11 oder 12.
